# EUROPEAN PATENT SPECIFICATION

(11) **EP 0 678 071 B1**
(45) Date of publication and mention of the grant of the patent: **12.05.1999**
(21) Application number: 94907227.6
(22) Date of filing: 13.01.1994
(51) Int. Cl.: B32B 3/12, G10K 11/16, B63G 8/34, B63G 13/02

(54) **METHOD AND APPARATUS FOR MASKING THE ACOUSTIC SIGNATURE OF VESSELS**
VERFAHREN UND APPARAT ZUM MASKIEREN AKUSTISCHER CHARAKTERISTIKEN VON SCHIFFEN
PROCEDE ET APPAREIL DE MASQUAGE DE LA SIGNATURE ACOUSTIQUE DE BATIMENTS MARINS

(30) Priority: 13.01.1993 US 3791
(43) Date of publication of application: 25.10.1995
(73) Proprietor: SUPRACOR SYSTEMS, INC., Sunnyvale, CA 94086 (US)
(72) Inventor: LANDI, Curtis, L., Sunnyvale, CA 94086 (US); WILSON, Susan, L., Sunnyvale, CA 94086 (US)
(74) Representative: Gahlert, Stefan, Dr.-Ing.
(86) International application number: US9400561
(87) International publication number: WO9415778

(56) References cited:
- EP-A- 0 288 984
- DE-A- 3 644 676
- DE-A- 3 803 636
- FR-A- 2 660 787
- US-A- 3 007 834
- US-A- 3 895 152
- US-A- 3 919 445
- US-A- 4 422 183
- US-A- 5 137 769

## Description

### BACKGROUND OF THE INVENTION

### Field of the Invention

This invention relates to a method and apparatus for masking the acoustic signature of surface and submarine vessels, and more particularly, to the provision of a resilient honeycomb cored cladding for the hull of a vessel to provide acoustic masking.

### Background

One of the most common methods of detecting the presence of surface and submarine vessels is the use of sonar equipment. Sonar can be classified into two basic types: i.e. active or passive sonar.

Equipment using active sonar detects the presence of a vessel by emitting a short pulse of sound ("ping") and monitoring the return of the pulse as it is reflected from the hull of the vessel. Passive sonar equipment, on the other hand, detects sound waves generated by the vessel as it moves through the water, typically vibrations produced by the vessel's propulsion system and other machinery on board.

Both active and passive sonar systems are, if the correct sophisticated equipment is used, able to produce information relating to both the position and size of the vessel detected. As such, sonar can be used to identify the vessel and, as a result, the sonar characteristics of the vessel are often called its acoustic signature. It can, particularly in military applications, be important to mask or alter the acoustic signature of a vessel, as such masking will reduce the chances of detection and identification thereof.

One method of masking the acoustic signature of a vessel that has been used in the past is known as the Masker System. This system is in use by many NATO nations and works by injecting air around the hull of the vessel. Unfortunately, the Masker System only operates within a narrow band of vessel speeds and is ineffective at speeds above 15 knots or at very low speeds where the air bubbles rise straight to the surface instead of streaming along the hull. Certain sea conditions also adversely effect the Masker System.

Furthermore, the Masker System increases the vessel's wake and this can be disadvantageous if the vessel is being attacked by wake-homing torpedoes. The Masker System also requires a supply of compressed air which itself can become a source of noise. Finally, air from the Masker System can be sucked into the cooling water intakes of the vessel, which can create additional problems as the cooling systems become inefficient.

Yet another method of masking the acoustic signature of a vessel is to install acoustic tiles in selected areas on the hull of the vessel. These tiles come in two basic varieties:
(i) decoupling tiles which deaden the sound produced by the vessel and interrupt its transmission of sounds into the water and thus help to defeat identification by passive sonars; and
(ii) anechoic tiles which defeat active sonar by reducing the amount of sonic energy reflected from the hull by the "ping" produced by this type of sonar.

Unfortunately, although effective in masking the acoustic signature of a vessel, the acoustic tiles that have been used to date are relatively thick (2 - 2.5 inches) and heavy (25 - 27 lbs. for a 2' x 2' tile). As a result, the tiles are both expensive to produce and expensive to install; the high installation costs being due primarily to the additional labor costs and other complications caused by the weight and thickness of the tiles. Furthermore, the tiles are difficult to secure in place during installation and require the use of complicated and expensive equipment.

There is thus a need for a lightweight and easy-to-install acoustic tile which effectively and efficiently masks the acoustic signature of a surface or submarine vessel.

### SUMMARY OF THE INVENTION

### Objects of this Invention

It is therefore an object of this invention to provide a lightweight, flexible acoustic tile system for installation onto the hull of a vessel to mask the acoustic signature thereof.

It is a further object of this invention to provide an acoustic tile which is made from a lightweight, durable and resilient material.

It is yet another object of this invention to provide an acoustic tile which is made of a flexible expanded honeycomb-type material.

Still another object of the present invention is to provide an acoustic tile of the type described which is easy to install without requiring complicated expensive installation equipment.

Yet a further objective of the present invention is to provide a tile of the type described which can easily be cut to size and is well suited to large-scale vacuum shoring.

### Summary of Invention

Briefly, according to a preferred embodiment of this invention, an apparatus for masking the acoustic signature of a surface or submarine vessel comprises a plurality of tile-like components each including an inner skin for securing the tile to the hull of the vessel, an outer water-impervious skin, and a core sandwiched between the outer and inner skins and made of an expanded honeycomb structure.

The acoustic tile of the invention also includes a number of channels formed through in inner skin, each of the channels being in communication with a vacuum port, such that, when the tile is placed against the hull of the vessel and a vacuum is applied to the vacuum port, the resultant negative pressure in the channels serves to draw the tile into intimate engagement with the hull of the vessel. As a result, good contact and flow of the adhesive used to affix the tiles to the vessel surface is achieved.

Preferably, the tiles are made of a thermo-plastic urethane and are 0.625 inches thick and have plan dimensions of 2' x 2'. Both the inner and outer skins of the tile are fused to the honeycomb core, and the thickness of the inner skin is slightly less than that of the outer skin.

### Advantages of the Invention

A primary advantage of this invention is that it provides a lightweight tile which can be used to mask the acoustic signature of a surface or submarine vessel. The light weight of the tiles means that no special lifts or shoring equipment is required for installation.

Another advantage of this invention is that the use of the acoustic tile reduces a vessel's reflectivity of transmitted sonar energy back to receiving equipment and, in turn, significantly reduces the range at which active detection of the vessel can be made.

Yet another advantage of this invention is that, in addition to reducing a vessel's acoustic signature on hostile passive sonars, use of the present invention adds to the sensitivity of the vessel's own sonar by causing the vessel to generate less self-noise into the sea. Thus, operators of on-board sonar have less background noise to work against.

Still a further advantage of this invention is that the acoustic tiles of the present invention require no additional equipment or piping, as is required by the Masker System, to provide the acoustic masking function required.

An additional advantage of the present invention is that it tends to reduce hull surface drag due to the undulating dynamics of the tile.

These and other objects and advantages of the present invention will no doubt become apparent to those skilled in the art after having read the following detailed description of the preferred embodiment illustrated in the several figures of the drawing.

### DESCRIPTION OF THE DRAWINGS

In the accompanying drawings:
Fig. 1 is a broken perspective view illustrating in part an exemplary hull of a vessel having acoustic tiles in accordance with the present invention mounted thereon;
Fig. 2 is a partially broken perspective view illustrating an acoustic tile in accordance with the present invention;
Fig. 3 is a plan view showing details of the inner skin of an integrated fairing tile in accordance with the present invention; and
Figs. 4-8 are enlarged cross-sections taken along the line 4-4 in Figure 3.

### BRIEF DESCRIPTION OF A PREFERRED EMBODIMENTS

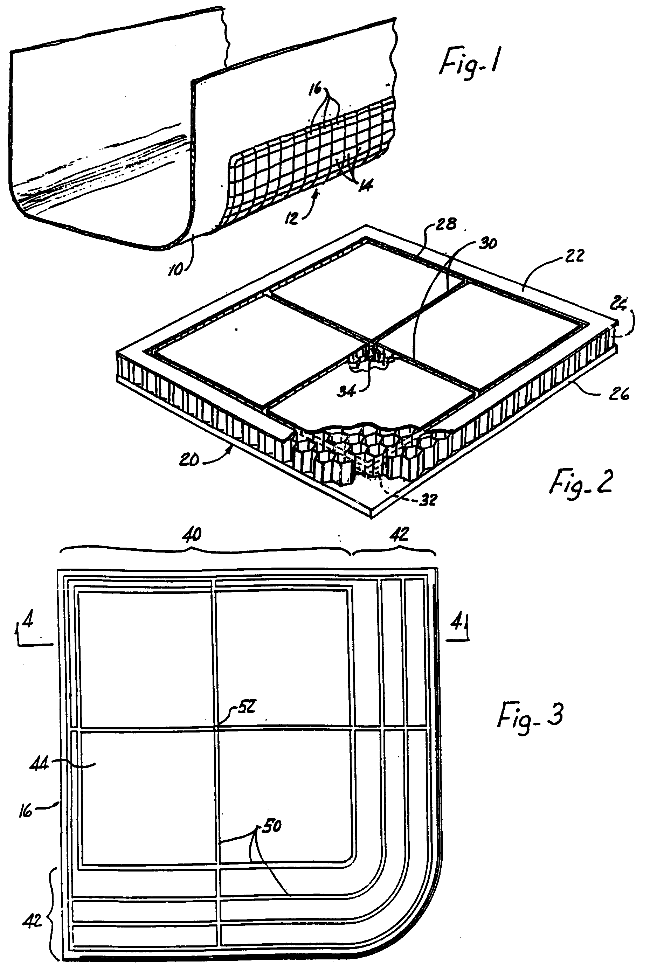

Referring now to Fig. 1 of the drawing, an acoustic coating system in accordance with the present invention applied to a ship hull 10 is shown generally at 12. The system is comprised of a plurality of rectangular (preferably square) tiles 14 affixed to the surface of the hull 10 by a suitable adhesive, and further includes a plurality of tapered fairing tiles 16 distributed around the system perimeter to provide a smooth transition from the hull surface to the outer surface of the tiles 14.

As is well known in the art, such tiles 14, 16 would normally be strategically positioned to cover selected areas of the ship's hull dependent upon whether the coating is intended to provide a decoupling function or an anechoic function, or both.

The general structure of the acoustic tile of this invention is illustrated at 20 in Fig. 2 of the accompanying drawing. Typically, the tile is a square of approximately 2' x 2' in plan dimension, and is comprised of a relatively thin inner skin (or "under-ply") 22, a honeycomb core 24 and a relatively thick outer skin (or "cover-ply") 26. The skin 22 is typically a sheet of 0.040" (or up to 0.100") thick thermoplastic elastomer (TPE), the core 24 is typically an expanded 0.500" thick honeycomb of TPE having wall thicknesses of 0.012" and cell diameters of 0.375", and the outer skin 26 is preferably a sheet of 0.125" thick TPE. The tiles are constructed using the method described in our earlier U.S. Patent No. 5,039,567 entitled "Resilient Panel Having Anisotrophic Flexing Characteristics and Method of Making Same", the disclosure of which is incorporated herein by reference.

To facilitate attachment of the tiles to the ship hull, circumscribing grooves or channels 28 and crossing grooves 30 (0.125" wide) are formed in or through the inner skin 22 and into the core 24 to a depth of approximately 0.125". Layers of the tile are broken away in the foreground, and dashed lines 32 are used to illustrate the depth of the channels.

Similarly, a mid-portion of the skin 22 and underlying core 24 are also broken away to reveal a small vacuum port 34 passing through the outer skin 26 to communicate with the grooves 30 and 28.

Additional channels can be cut on site to accommodate odd sections of the hull, and can be arrayed in any suitable pattern, e.g., in straight lines, diagonal lines, zig-zag patterns, etc. Furthermore, the cells opened by the channel forming cuts may be filled with a suitable filler material so as to avoid collapse of those cells during vacuum shoring.

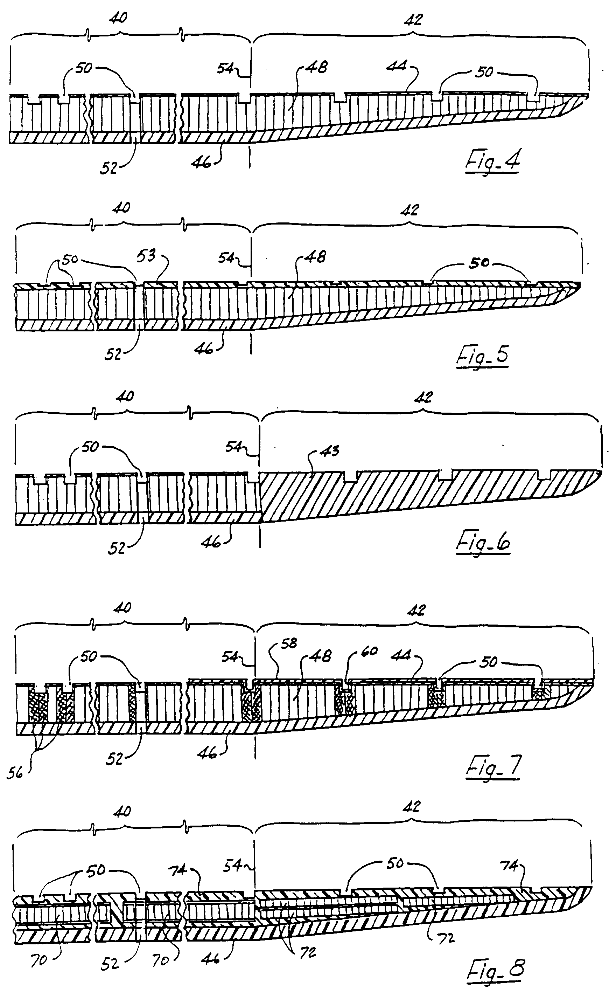

Turning now to Figs. 3 through 8, the details of a corner fairing tile 16 will be described. Note that Fig. 3 is a plan view of the inner skin side and Figs. 4 through 8 are broken cross-sections taken along the line 4-4 in Fig. 3. The fairing tile is comprised of a generally flat area 40 and a gradually tapering portion 42 disposed along two sides of the tile. A simple edge fairing tile would obviously taper only along one side. The tapered portion 42 serves to streamline the tile so that it provides a minimum flow resistance to the vessel hull as it moves through the water.

Like the previously described rectangular tile, the typical fairing tile includes a thin inner skin 44 and a thicker outer skin 46 (Fig. 4) which sandwich between them a core 48. The thin inner skin 44 is typically 0.04" to 0.100" thick, while the thickness of the outer skin 46 is typically at least 0.125" thick. The core at the flat portion 40 of the tile is approximately 0.5" thick and comprises a honeycomb structure of the type described above. The tapered core portion 42 is identical in configuration to that of the flat portion (and may in fact be an integral part of portion 40) except that it has been shaved, trimmed, or otherwise altered to provide the desired taper. The inner and outer skins 44 and 46, and the core 48 are all made of a thermo-plastic urethane and are fused together to form a single, watertight, unitary construction, i.e., an integrated acoustic tile and fairing piece.

Both the flat and tapered portions 40, 42 of the tile have a number of grooves or channels 50 formed in or through the inner skin 44. As is apparent from the drawing, these channels are all interconnected and lead either directly or indirectly to a vacuum port 52 formed through the honeycomb and outer skin of the tile. The port 52 can be of any suitable configuration ranging from a simple puncturable membrane to an elaborate valving structure. In some cases it may be desirable to use a somewhat thicker inner skin 53 as depicted in Fig. 5, so that the channels 50 can be molded or cut thereinto. As one example, the inner skin, or underply, 53 was made of a layer of material 0.090" thick with 0.070" deep channels 50. The benefit of using this format for the tiles and fairing tiles is that when the shoring vacuum is applied, the tiles will not experience dimpling.

The tapered portion 42 of the tile can be constructed in several ways: One method is to pre-form or trim the honeycomb core 48, as described above, and thereafter cast a pourable thermo-plastic urethane to form the sloping outer skin. As an alternative, the entire sloping portion 42 can be made of a cast elastomeric material or foam which, as shown at 43 in Fig. 6, is then joined to the rectangular core 40 at line 54, the transition between the sloping portion 42 and the flat portion 40. The cast elastomer would have similar acoustic masking properties to the honeycomb core making up the rest of the tile. However, as the sloping portions 42 represent a relatively small percentage of the total area on the hull covered by acoustic tiles, these properties need not be as good as that of the honeycomb structure. In addition, the fairings are usually angled and would, in any event, not reflect sound from active sonar as well as other parts of the hull of the vessel.

As depicted in Fig. 7, it is sometimes preferable to fill the cells 56, that have been opened during the channel forming process, with a suitable material, so as to prevent partial collapse of those cells during the vacuum shoring process. In addition, it may also be desirable to bond an inner liner 58, having preformed channels 60, to the skin 44. Alternatively, a plastic elastomer could be cast over the scored inner side to accomplish a result similar to that achieved by the layer 58.

In order to save costs, it may be desirable to use yet another configuration such as is depicted in Fig. 8, wherein the outer skin 46 is shaped, in the fairing tile case, and smaller honeycomb pads 70 and 72 are positioned thereover and then cast in place with a suitable resilient material 74. Note that in order to accommodate the tapered edges, thinner pads 72 with the same, or a different, cell size may be stacked as indicated.

When the tile is to be secured to the hull of a vessel, the inner skin 44 is first abraded or treated with a urethane primer. An adhesive, preferably an epoxy or a pressure-sensitive adhesive, is then applied thereto (and to the hull) and the tile is positioned and held in place against the hull. A vacuum is then applied at the port 52 to reduce the pressure in the channels 50 and cause the tile to be drawn into firm engagement with the hull. The vacuum port 52 can then be sealed off and the tile held in position by the combination of adhesive and vacuum or, alternatively, if the vacuum is removed, by the adhesive alone. As the tiles are installed in side-by-side relationship, a suitable adhesive or silicone caulk is applied at the tile edges to permanently seal the junctions between the tiles. It is important to note that the entire panel must be air-tight so that in use no sea water is able to leak into or under any part of the panel.

Once the tiles have been fitted onto the hull of the vessel, the outer skin 46 can be coated with an anti-foulant, which reduces the amount of marine growth on the exterior on the hull of the vessel.

## Claims

1. An acoustic tile for masking the acoustic signature of a surface or submarine vessel, characterized by:
a flexible inner skin (22, 44, 53) having an inner surface and an outer surface, said inner skin (22, 44, 53) for attachment to the hull (10) of the vessel;
a resilient water-impervious outer skin (26, 46) having an inner surface and an outer surface;
a core (24, 48) formed of undulated strips of resilient thermoplastic material, thermal compression bonded together such that the bonds between adjacent strips are at regular intervals and form bond rows regularly spaced in the direction transverse to said bond rows, with the bonds in a bond row being longitudinally offset relative to the bonds in an adjacent bond row, said strips forming cell walls defining a plurality of contiguous, regularly shaped cells, said core having a first face formed by a first extremity of said cell walls and a second face formed by a second extremity of said cell walls, said first face being thermal compression bonded to said outer surface of said inner skin (22, 44, 53) and said second face being thermal compression bonded to said inner surface of said outer skin (26, 46);
an adhesive material disposed on said inner surface of said inner skin (22, 44, 53), for attaching said inner skin (22, 44, 53) to the hull (10) of said vessel;
a vacuum port (34, 52) formed through said outer skin (26, 46); and
a plurality of channels (28, 30, 50) formed in said inner skin (22, 44, 53), each of said channels (28, 30, 50) being in communication with said vacuum port (34, 52), whereby, a negative pressure applied at said vacuum port (34, 52) of a tile (14, 16) placed against said hull (10) of said vessel enhances engagement of the tile (14, 16) with the hull (10) of the vessel so that said adhesive disposed therebetween is rendered more effective in securing said tile (14, 16) to said hull (10).

2. The acoustic tile according to claim 1, characterized in that the tile (14, 16) is made of a thermoplastic polyurethane.

3. The acoustic tile according to claim 2, characterized in that the inner skin (22, 44, 53) is thinner than the outer skin (26, 46).

4. The acoustic tile according to claim 1 or 3, characterized in that said tile (14, 16) includes a planar portion (40) having a first uniform thickness and a transition portion (42) extending therefrom such that said transition portion (42) and said planar portion (40) lie substantially in the same plane, said transition portion (42) having a non-uniform second thickness, a proximal region adjacent to said planar portion (40) and having a second thickness equal to said first thickness, and a distal region having a second thickness less than said first thickness.

5. The acoustic tile according to claim 1 or 4, characterized in that said tile (14, 16) also includes a second transition position (42) extending from said planar portion (40) such that said planar portion (40), said transition portion (42) and said second transition portion (42) all substantially lie in the same plane.

6. The acoustic tile according to claim 4, characterized in that said channels (28, 30, 50) are formed in both said planar portion (46) and said transition portion (42).

7. The acoustic tile according to claim 1, characterized in that said vacuum port (34, 52) is located in a position central to the outer skin (26, 46) of said tile (14, 16).

8. The acoustic tile according to claim 3, characterized in that said inner skin (22, 44, 53) has a thickness of at least 0.040 inches, said core (24, 48) has a thickness of at least 0.500 inches, and said outer skin (26, 46) has a thickness of at least 0.125 inches.

9. The acoustic tile according to claim 1, characterized in that said tile (14, 16) includes a planar portion (40) having a first uniform thickness and a transition portion (42) extending therefrom such that said transition portion (42) and said planar portion (40) lie substantially in the same plane, said transition portion having a non-uniform second thickness, a proximal region adjacent to said planar portion (40) and having a second thickness equal to said first thickness, and a distal region having a second thickness less than said first thickness.

10. A method of making an acoustic tile for attachment to the hull (10) of a surface or submarine vessel for masking the acoustic signature thereof, characterized by the steps of:
preparing a flexible honeycomb shaped core (24, 48) by thermal compression bonding together at staggered positions a plurality of strips of thermoplastic elastomeric material, and expanding the bonded strips to form cell walls defining a plurality of contiguous regularly shaped cells (56), said core (24, 48) having a first face formed by a first extremity of said cell walls and a second face formed by a second extremity of said cell walls;
thermal compression bonding a sheet of thermoplastic elastomer to said first face of said core (24, 48) to form an inner skin (22, 44, 53);
thermal compression bonding another sheet of thermoplastic elastomer to said second face of said core (24, 48) to form an outer skin (26, 46);
forming a vacuum port (34, 52) in said outer skin (26, 46); and
forming a plurality of channels (28, 30, 50) in said inner skin (22, 44, 53), said channels (28, 30, 50) being in communication with said vacuum port (34, 52) such that when said tile (14, 16) is placed against said hull (10) and a negative pressure is applied at said vacuum port (34, 52), the resultant negative pressure in said channels (28, 30, 50) serves to enhance the engagement between said tile (14, 16) and said hull (10).

11. A method of masking the acoustic signature of a surface or submarine vessel, characterized by the steps of:
forming a plurality of masking tiles (14, 16), each of which are made by
preparing a flexible honeycomb shaped core (24, 48) by thermal compression bonding together at staggered positions a plurality of strips of thermoplastic elastomeric material, and expanding the bonded strips to form cell walls defining a plurality of contiguous regularly shaped cells (56), said core (24, 48) having a first face formed by a first extremity of said cell walls and a second face formed by a second extremity of said cell walls;
thermal compression bonding a sheet of thermoplastic elastomer to said first face of said core (24, 48) to form an inner skin (22, 44, 53);
thermal compression bonding another sheet of thermoplastic elastomer to said second face of said core (24, 48) to form an outer skin (26, 46);
forming a vacuum port (34, 52) in said outer skin (26, 46); and
forming a plurality of channels (28, 30, 50) in said inner skin (22, 44, 53), said channels (28, 30, 50) being in communication with said vacuum port (34, 52);
applying an adhesive to an exterior surface of said inner skin (22, 44, 53);
placing the tiles (14, 16) in position on the hull (10);
applying a vacuum drawing means to the vacuum port (34, 52) of each tile (14, 16), said vacuum drawing means being in communication with said channels (28, 30, 50);
drawing a vacuum in said channels (28, 30, 50) to cause the adhesive coated inner skin (22, 44, 53) of each said tile (14, 16) to engage said hull (10); and
maintaining said vacuum until the adhesive has set and securely holds the tile (14, 16) in place on the hull (10).

## Patentansprüche

1. Akustische Platte zum Verbergen der akustischen Charakteristik eines Schiffes oder eines U-Bootes gekennzeichnet durch:
eine flexible Innenhaut (22, 44, 53), die eine innere Fläche und eine äußere Fläche aufweist, wobei die Innenhaut (22, 44, 53) zur Befestigung an der Hülle (10) des Schiffes geeignet ist;
eine elastische wasserundurchlässige Außenhaut (26, 46), die eine innere Fläche und eine äußere Fläche aufweist;
einen Kern (24, 48), der aus gewellten Streifen aus elastischem thermoplastischem Material gebildet ist, die durch thermisches Druckbonding derart miteinander verbunden sind, daß die Verbindung zwischen benachbarten Streifen in regelmäßigen Intervallen erfolgt und daß regelmäßig beabstandete Verbindungsreihen in der Querrichtung der Verbindungsreihen gebildet sind, wobei die Verbindungen in einer Verbindungsreihe in Längsrichtung in Bezug auf die Verbindungen einer benachbarten Verbindungsreihe beabstandet sind, wobei die Streifen Zellenwände bilden, die eine Mehrzahl von angrenzenden regelmäßig geformten Zellen definieren, wobei der Kern eine erste Fläche besitzt, die von einem ersten Ende der Zellenwand gebildet ist, und eine zweite Fläche besitzt, die von einem zweiten Ende der Zellenwände gebildet ist, wobei die erste Fläche durch thermisches Druckbonding mit der äußeren Fläche der Innenhaut (22, 44, 53) verbunden ist und die zweite Fläche durch thermisches Druckbonding mit der inneren Fläche der Außenhaut (26, 46) verbunden ist;
ein Klebematerial, das auf der inneren Fläche der Innenhaut (22, 44, 53) vorgesehen ist, um die Innenhaut (22, 44, 53) an der Hülle (10) des Schiffes zu befestigen;
einen Vakuumanschluß (34, 52), der in der Außenhülle (26, 46) gebildet ist und
eine Mehrzahl von Kanälen (28, 30, 50), die in der Innenhaut (22, 44, 53) gebildet sind, wobei jeder der Kanäle (28, 30, 50) mit dem Vakuumanschluß (34, 52) in Verbindung steht, wodurch ein negativer Druck, der an den Vakuumanschluß (34, 52) einer an der Hülle (10) des Schiffes anliegenden Platte (14, 16) die Verbindung der Platte (14, 16) mit der Hülle (10) des Schiffes derart verbessert, daß die Fähigkeit des dazwischen vorgesehenen Klebers zur Befestigung der Platte (14, 16) an der Hülle (10) verbessert wird.

2. Akustische Platte nach Anspruch 1, dadurch gekennzeichnet, daß die Platte (14, 16) aus einem thermoplastischen Polyurethan hergestellt ist.

3. Akustische Platte nach Anspruch 2, dadurch gekennzeichnet, daß die Innenhaut (22, 44, 53) dünner als die Außenhaut (26, 46) ist.

4. Akustische Platte nach Anspruch 1 oder 3, dadurch gekennzeichnet, daß die Platte (14, 16) einen ebenen Bereich (40) aufweist, der eine erste gleichförmige Dicke besitzt, sowie einen Übergangsbereich (42), der sich davon derart erstreckt, daß der Übergangsbereich (42) und der ebene Bereich (40) im wesentlichen in derselben Ebene liegen, wobei der Übergangsbereich (42) eine nicht gleichförmige zweite Dicke besitzt und einen proximalen Bereich aufweist, der sich an den ebenen Bereich (40) anschließt und eine zweite Dicke aufweist, die der ersten Dicke entspricht, und einen entfernten Bereich aufweist, der eine zweite Dicke besitzt, die geringer als die erste Dicke ist.

5. Akustische Platte nach Anspruch 1 oder 4, dadurch gekennzeichnet, daß die Platte 14, 16 auch einen zweiten Übergangsbereich (42) einschließt, der sich von dem ebenen Bereich (40) aus derart erstreckt, daß der Übergangsbereich (42) und der zweite Übergangsbereich (42) alle im wesentlichen in derselben Ebene liegen.

6. Akustische Platte nach Anspruch 4, dadurch gekennzeichnet, daß die Kanäle (28, 30, 50) sowohl in dem ebenen Bereich (46) als auch in dem Übergangsbereich (42) gebildet sind.

7. Akustische Platte nach Anspruch 1, dadurch gekennzeichnet, daß der Vakuumanschluß (34, 52) in einer zentralen Position an der Außenhaut (26, 46) der Platte (14, 16) gebildet ist.

8. Akustische Platte nach Anspruch 3, dadurch gekennzeichnet, daß die Innenhaut (22, 44, 53) eine Dicke von wenigstens 0,040 Inch besitzt, daß der Kern (24, 48) eine Dicke von wenigstens 0,500 Inch besitzt, und daß die Außenhaut (26, 46) eine Dicke von wenigstens 0,125 Inch besitzt.

9. Akustische Platte nach Anspruch 1, dadurch gekennzeichnet, daß die Platte (14, 16) einen ebenen Bereich (40) aufweist, der eine erste gleichförmige Dicke besitzt, und einen Übergangsbeareich (42) aufweist, der sich davon derart erstreckt, daß der Übergangsbereich (42) und der ebene Bereich (40) im wesentlichen in derselben Ebene liegen, wobei der Übergangsbereich eine nicht gleichförmige zweite Dicke besitzt, einen proximalen Bereich, der an den ebenen Bereich (40) angrenzt und eine zweite Dicke aufweist, die gleich der ersten Dicke ist, und einen entfernten Bereich aufweist, der eine zweite Dicke besitzt, die geringer als die erste Dicke ist.

10. Verfahren zur Herstellung einer akustischen Platte zur Befestigung einer Hülle (10) der Oberfläche eines Schiffes oder eines U-Bootes zum Verbergen seiner akustischen Charakteristik, gekennzeichnet durch die Schritte:
Herstellen eines flexiblen honeycomb-förmigen Kerns (24, 48) durch Verbinden einer Mehrzahl von Streifen aus thermoplastischem elastomeren Material mittels thermischem Druckbonding an versetzten Positionen und Ausdehnen der verbundenen Streifen, um Zellenwände zu bilden, die eine Mehrzahl von angrenzenden regelmäßig geformten Zellen (56) definieren, wobei der Kern (24, 48) eine erste Fläche besitzt, die durch ein erstes Ende der Zellenwände gebildet ist, und eine zweite Fläche besitzt, die durch ein zweites Ende der Zellenwände gebildet ist;
thermisches Druckbonding eines Bogens aus thermoplastischem Elastomer mit der ersten Fläche des Kerns (24, 48), um eine Innenhaut (22, 44, 53) zu bilden;
thermisches Druckbonding eines anderen Bogens aus thermoplastischem Elastomer an die zweite Fläche des Kerns (24, 48), um eine Außenhaut (26, 46) zu bilden;
Herstellen eines Vakuumanschlusses (34, 52) in der Außenhaut (26, 46) und
Bilden einer Mehrzahl von Kanälen (28, 30, 50) in der Innenhaut (22, 44, 53), wobei die Kanäle (28, 30, 50) mit dem Vakuumanschluß (34, 52) derart in Verbindung stehen, daß dann, wenn die Platte an der Hülle (10) plaziert wird und ein negativer Druck an den Vakuumanschluß (34, 52) angelegt wird, der sich ergebende negative Druck in den Kanälen (28, 30, 50) die Verbindung zwischen der Platte (14, 16) und der Hülle (10) verbessert.

11. Verfahren zum Verbergen der akustischen Charakteristik eines Schiffes oder eines U-Bootes gekennzeichnet durch die Schritte:
Herstellen einer Mehrzahl von Dämpfungsplatten (14, 16), von denen jede hergestellt ist durch
Herstellen eines flexiblen honeycomb-förmigen Kerns (24, 48) durch Verbinden einer Mehrzahl von Streifen aus thermoplastischem elastomeren Material an versetzten Positionen mittels thermischem Druckbonding und Ausdehnen der verbundenen Streifen, um Zellenwände zu bilden, die eine Mehrzahl von angrenzenden regelmäßig geformten Zellen (56) definieren, wobei der Kern (24, 48) eine erste Fläche besitzt, die von einem ersten Ende der Zellenwände gebildet ist, sowie eine zweite Fläche besitzt, die von einem zweiten Ende der Zellenwände gebildet ist;
thermisches Druckbonding eines Bogens aus thermoplastischem Elastomer an die erste Fläche des Kerns (24, 48), um eine Innenhaut (22, 44, 53) zu bilden;
thermisches Druckbonding eines anderen Bogens aus thermoplastischem Elastomer an die zweite Fläche des Kerns (24, 48), um eine Außenhaut (26, 46) zu bilden;
Bilden eines Vakuumanschlusses (34, 52) in der Außenhaut (26, 46); und
Bilden einer Mehrzahl von Kanälen (24, 30, 50) in der Innenhaut (22, 44, 53), wobei die Kanäle (24, 30, 50) in Verbindung mit dem Vakuumanschluß (34, 52) stehen;
Aufbringen eines Klebstoffes auf eine Außenfläche der Innenhaut (22, 44, 53);
Plazieren der Platten (14, 16) auf der Hülle (10) in Position;
Anlegen einer vakuumerzeugenden Einrichtung an den Vakuumanschluß (34, 52) jeder Platte (14, 16), wobei die vakuumerzeugende Einrichtung in Verbindung mit den Kanälen (28, 30, 50) steht;
Erzeugen eines Vakuums in den Kanälen (28, 30, 50) um zu bewirken, daß sich die mit dem Klebstoff versehene Innenhaut (22, 44, 53) jeder Platte (14, 16) an die Hülle (10) anlegt und
Aufrechterhalten des Vakuums, bis der Klebstoff ausgehärtet ist und die Platte an ihrem Platz auf der Hülle (10) sicher hält.

## Revendications

1. Plaque acoustique servant à masquer la signature acoustique d'un bâtiment maritime de surface ou sous-marin, caractérisée par :
une peau intérieure (22, 44, 53) souple comportant une surface intérieure et une surface extérieure, cette peau intérieure (22, 44, 53) étant destinée à être fixée sur la coque (10) du bâtiment ;
une peau extérieure (26, 46) élastique, imperméable à l'eau, comportant une surface intérieure et une surface extérieure ;
une âme (24, 48) formée de bandes ondulées de matière thermoplastique élastique, reliées par thermocompression de telle sorte que les liens entre les bandes adjacentes se situent à intervalles réguliers et forment des rangées de liens régulièrement espacés dans la direction transversale aux rangées de liens, les liens d'une rangée de liens étant longitudinalement décalés par rapport aux liens de la rangée adjacente de liens, ces bandes formant des parois d'alvéoles définissant une pluralité d'alvéoles contiguës, de formes régulières, l'âme présentant une première face formée par une première extrémité des parois d'alvéoles et une deuxième face formée par une deuxième extrémité des parois d'alvéoles, la première face étant fixée par thermocompression sur la surface extérieure de la peau intérieure (22, 44, 53) et la deuxième face étant fixée par thermocompression sur la surface intérieure de la peau extérieure (26, 46) ;
un matériau adhésif disposé sur la surface intérieure de la peau intérieure (22, 44, 53), afin de permettre la fixation de la peau intérieure (22, 44, 53) sur la coque (10) du bâtiment ;
un orifice à vide (34, 52) ménagé à travers la peau extérieure (26, 46) ; et
une pluralité de canaux (28, 30, 50) formés dans la peau intérieure (22, 44, 53), chacun de ces canaux (28, 30, 50) se trouvant en communication avec l'orifice à vide (34, 52), une pression négative appliquée au niveau de l'orifice à vide (34, 52) d'une plaque (14, 16) placée contre la coque (10) du bâtiment améliorant le contact entre la plaque (14, 16) et la coque (10) du bâtiment de telle sorte que l'adhésif appliqué entre eux est rendu plus efficace pour fixer la plaque (14, 16) sur la coque (10).

2. Plaque acoustique selon la revendication 1, caractérisé en ce que la plaque (14, 16) est constituée en polyuréthanne thermoplastique.

3. Plaque acoustique selon la revendication 2, caractérisée en ce que la peau intérieure (22, 44, 53) est plus fine que la peau extérieure (26, 46).

4. Plaque acoustique selon la revendication 1 ou 3, caractérisée en ce que la plaque (14, 16) comprend une portion plane (40) présentant une première épaisseur uniforme et une portion de transition (42) s'étendant à partir de celle-ci, de telle sorte que la portion de transition (42) et la portion plane (40) se situent sensiblement dans le même plan, la portion de transition (42) présentant une deuxième épaisseur non-uniforme, une zone proximale adjacente à la portion plane (40) et présentant une deuxième épaisseur égale à la première épaisseur, et une zone distale présentant une deuxième épaisseur inférieure à la première épaisseur.

5. Plaque acoustique selon la revendication 1 ou 4, caractérisée en ce que la plaque (14, 16) comprend également une deuxième portion de transition (42) s'étendant à partir de la portion plane (40) de telle sorte que la portion plane (40), la portion de transition (42) et la deuxième portion de transition (42) se situent toutes dans le même plan.

6. Plaque acoustique selon la revendication 4, caractérisée en ce que les canaux (28, 30, 50) sont formés à la fois dans la portion plane (46) et dans la portion de transition (42).

7. Plaque acoustique selon la revendication 1, caractérisée en ce que l'orifice à vide (34, 52) est placé dans une position centrale par rapport à la peau extérieure (26, 46) de la plaque (14, 16).

8. Plaque acoustique selon la revendication 3, caractérisée en ce que la peau intérieure (22, 44, 53) présente une épaisseur d'au moins 0,040 pouces, l'âme (24, 48) présente une épaisseur d'au moins 0,500 pouces, et la peau extérieure (26, 46) présente une épaisseur d'au moins 0,125 pouces.

9. Plaque acoustique selon la revendication 1, caractérisée en ce que la plaque (14, 16) comprend une portion plane (40) présentant une première épaisseur uniforme et une portion de transition (42) s'étendant à partir de celle-ci, de telle sorte que la portion de transition (42) et la portion plane (40) se situent sensiblement dans le même plan, la portion de transition présentant une deuxième épaisseur non-uniforme, une zone proximale adjacente à la portion plane (40) et présentant une deuxième épaisseur égale à la première épaisseur, et une zone distale présentant une deuxième épaisseur inférieure à la première épaisseur.

10. Procédé de fabrication d'une plaque acoustique destinée à être fixée à la coque (10) d'un bâtiment maritime de surface ou sous-marin, afin de masquer la signature acoustique de celui-ci, caractérisé par les étapes qui consistent à :
préparer une âme (24, 48) flexible à structure en nid d'abeille, en reliant entre elles, par thermocompression, de façon décalée, une pluralité de bandes en matériau élastomère thermoplastique, et mousser les bandes reliées afin de former des parois d'alvéoles définissant une pluralité d'alvéoles (56) contiguës, de forme régulière, l'âme (24, 48) présentant une première face formée par une première extrémité des parois d'alvéoles et une deuxième face formée par une deuxième extrémité des parois d'alvéoles ;
fixer, par thermocompression, une feuille d'élastomère thermoplastique sur la première face de l'âme (24, 48) pour former une peau intérieure (22, 44, 53) ;
fixer, par thermocompression, une autre feuille d'élastomère thermoplastique sur la deuxième face de l'âme (24, 48) pour former une peau extérieure (26, 46) ;
ménager un orifice à vide (34, 53) dans la peau extérieure (26, 46) ; et
former une pluralité de canaux (28, 30, 50) dans la peau intérieure (22, 44, 53), ces canaux (28, 30, 50) se trouvant en communication avec l'orifice à vide (34, 52) de telle sorte que lorsque la plaque (14, 16) est placée contre la coque (10) et qu'une pression négative est appliquée au niveau de l'orifice à vide (34, 52), la pression négative résultante qui règne dans les canaux (28, 30, 50) sert à améliorer le contact entre la plaque (14, 16) et la coque (10).

11. Procédé pour masquer la signature acoustique d'un bâtiment maritime de surface ou sous-marin, caractérisé par les étapes qui consistent à :
former une pluralité de plaques de masquage (14, 16), chacune étant fabriquée en
préparer une âme (24, 48) flexible à structure en nid d'abeille, en reliant entre elles, par thermocompression, de façon décalée, une pluralité de bandes en matériau élastomère thermoplastique, et mousser les bandes reliées afin de former des parois d'alvéoles définissant une pluralité d'alvéoles (56) contiguës, de forme régulière, l'âme (24, 48) présentant une première face formée par une première extrémité des parois d'alvéoles et une deuxième face formée par une deuxième extrémité des parois d'alvéoles ;
fixer, par thermocompression, une feuille d'élastomère thermoplastique sur la première face de l'âme (24, 48) pour former une peau intérieure (22, 44, 53) ;
fixer, par thermocompression, une autre feuille d'élastomère thermoplastique sur la deuxième face de l'âme (24, 48) pour former une peau extérieure (26, 46) ;
ménager un orifice à vide (34, 52) dans la peau extérieure (26, 46) ; et
former une pluralité de canaux (28, 30, 50) dans la peau intérieure (22, 44, 53), ces canaux (28, 30, 50) se trouvant en communication avec l'orifice à vide (34, 52) ;
appliquer un adhésif sur la surface extérieure de la peau intérieure (22, 44, 53) ;
mettre les plaques (14, 16) en place sur la coque (10) ;
appliquer des moyens pour créer un vide sur l'orifice à vide (34, 52) de chaque plaque (14, 16), ces moyens pour créer un vide communiquant avec les canaux (28, 30, 50) ;
créer un vide dans les canaux (28, 30, 50) afin d'amener la peau intérieure (22, 44, 53) revêtue d'adhésif de chaque plaque (14, 16) à être en contact avec la coque (10) ; et
maintenir le vide jusqu'à ce que l'adhésif ait pris et maintienne solidement la plaque (14, 16) en place sur la coque (10).
